# EUROPÄISCHE PATENTANMELDUNG

(11) **EP 1 574 635 A2**
(43) Veröffentlichungstag der Anmeldung: **14.09.2005**
(21) Anmeldenummer: 05003713.4
(22) Anmeldetag: 22.02.2005
(51) Int. Cl.: E04F 15/18, E04F 15/12, F24D 3/14

(54) **Wärme- und Trittschalldämmplatte für eine in Gussasphalt eingebettete Fussbodenheizung**

(30) Priorität: 02.03.2004 DE 202004003205 U
(71) Anmelder: herotec GmbH Flächenheizung, D-59227 Ahlen-Vorhelm (DE)
(72) Erfinder: Thomas Heuser, 59320 Ennigerloh (DE)
(74) Vertreter: Meinke, Dabringhaus und Partner GbR

(57) **Zusammenfassung**

Eine Wärme- und Trittschalldämmplatte (2) oder -rolle aus Mineralwolle und einer Abdeckfolie (3) für Fußbodenheizungen in Verbindung mit Gußasphalt (8) soll für einen derartigen Einsatz angepaßt sein.

Dies wird dadurch erreicht, daß die dem Gußasphalt (8) zugewandte Seite der Rolle bzw. Platte (2) mit einer hitzebeständigen Aluminium-Vliesfolie (3) versehen ist.

## Beschreibung

Die Erfindung richtet sich auf eine Wärme- und Trittschalldämmplatte oder -rolle des Oberbegriffes des Anspruches 1.

Es ist bekannt, Wärme- und Trittschalldämmrollen bzw. -platten in Verbindung mit Fußbodenheizungen einzusetzen, wobei diese Platten in der Regel eine den zu verlegenden Heizungsrohren zugewandte Abdeckfolie aufweisen, auf der ein Raster aufgedruckt ist, um das Verlegen zu erleichtern (z.B. DE 28 41 208 C oder DE 38 19 156 A).

Die bekannten Wärme- und Trittschalldämmelemente bestehen in der Regel aus Polystyrolschaum und sind daher in Verbindung mit Gußasphalt nicht einzusetzen, da dieser mit einer Temperatur von über 200°C verarbeitet wird.

Aus diesem Grunde ist es bekannt, beim Einsatz von Gußasphalt eine gußasphalttaugliche Trittschalldämmung einzusetzen, wobei allerdings die auch dort vorgesehenen Abdeckfolien häufig schon bei unter 200°C brennbar sind, so daß sie bei dem Einsatz von Gußasphalt zerstört werden. Bei Fußbodenheizungen einzusetzende Werkstoffe offenbaren z.B. die DE 44 28 613 A, das DE 203 00 409 U oder das DE 69 40 756 U, in dem Verbundisolierplatten beschrieben sind.

Aufgabe der Erfindung ist es, eine gußasphaltwiderstandsfähige Abdeckfolie für die einzusetzenden Wärme- und Trittschalldämmelemente bereitzustellen.

Dies geschieht bei einer Rolle bzw. Platte aus Mineralwolle der eingangs genannten Art dadurch, daß die dem Gußasphalt zugewandte Seite der Rolle bzw. Platte mit einer hitzebeständigen Aluminium-Vliesfolie versehen ist.

Mit der Erfindung wird erreicht, daß die zur Trittschalldämmung eingesetzte Rolle bzw. Matte aus Mineralwolle optimal zur Verlegung von Fußbodenheizungsrohren herangezogen werden kann, da die Aluminium-Vliesfolie höheren Wärmebelastungen standhält, insbesondere den Temperaturen, mit denen Gußasphalt verlegt wird. Bei einer derartigen Mineralwollplatte kann es sich beispielsweise um eine Platte aus Steinwolle, Schlackenwolle, Glaswolle od. dgl. handeln, dies gilt selbstverständlich auch für die eingesetzte entsprechende Rolle. Diese Rolle bzw. Platte ist der Brandklasse A1 bzw. A2 zuzuordnen mit der damit verbundenen Belastbarkeit gegen Wärme.

Erfindungsgemäß kann die Folie lose verlegt, aber auch aufkaschiert sein.

Eine weitere Ausgestaltung der Erfindung besteht darin, daß die Aluminium-Vliesfolie mit einem Raster od. dgl. bedruckt ist, was bei derartigen Folien, die nicht hitzebeständig sind, für sich gesehen bekannt ist.

Die Folie kann erfindungsgemäß ein Flächengewicht pro Quadratmeter von 60 g bis 90 g aufweisen, wie dies die Erfindung ebenfalls vorsieht.

In weiterer Ausgestaltung sieht die Erfindung einen Aufbau der eingesetzten Aluminium-Vliesfolie vor, der sich dadurch auszeichnet, daß die Aluminium-Vliesfolie aus einer PET-Kaschierfolie, einer Klebebeschichtung, einer Aluminium-Folie sowie einem PET-Vlies gebildet ist.

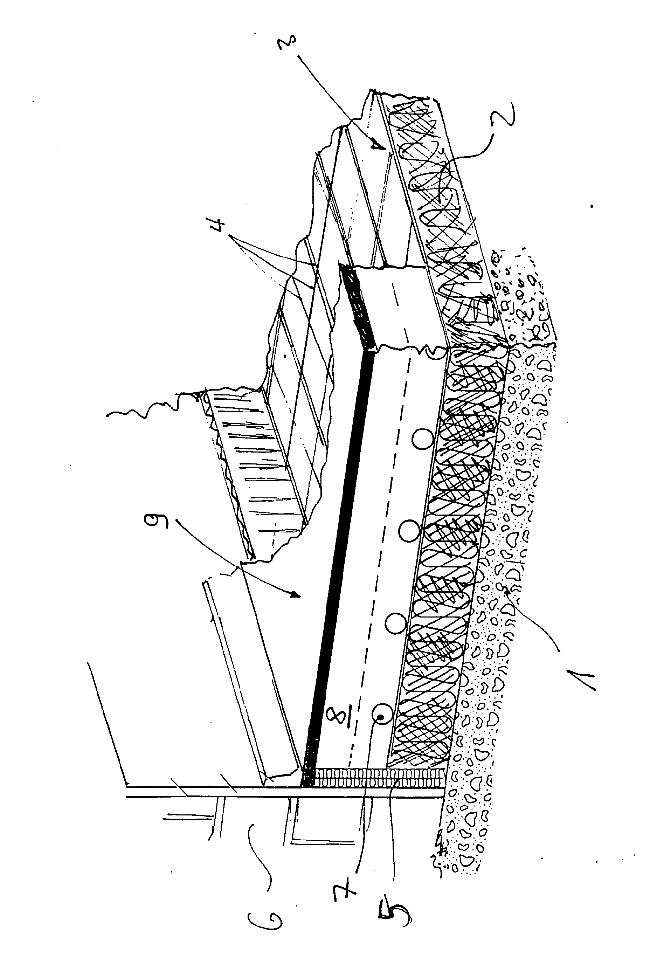

Weitere Merkmale, Einzelheiten und Vorteile der Erfindung ergeben sich aufgrund der nachfolgenden Beschreibung sowie anhand der Zeichnung. Diese zeigt in vereinfachter dreidimensionaler Form einen Bodenaufbau mit einer Wärmetrittschalldämmplatte gemäß der Erfindung.

Auf einem allgemein mit 1 bezeichneten Betonboden ist eine Wärme- und Trittschalldämmplatte aus Mineralwolle, mit 2 bezeichnet, verlegt, auf deren Oberfläche eine erfindungsgemäße Aluminium-Vliesfolie, allgemein mit 3 bezeichnet, aufkaschiert ist mit beispielsweise einem Flächengewicht von 75 g/m². Diese Vliesfolie ist z.B. mit einem Raster in schwarzer Farbe bedruckt, dieses Raster ist in der Figur mit 4 bezeichnet.

Dargestellt in der Zeichnung ist noch ein Rand mit dem Streifen 5 vor einem Ziegelmauerwerk. Über die auf der Aluminium-Vliesfolie verlegten Heizungsrohre 7 ist eine Gußasphaltmasse 8 aufgebracht, auf der sich dann ein Bodenbelag 9 befindet.

Natürlich ist das beschriebene Ausführungsbeispiel der Erfindung noch in vielfacher Hinsicht abzuändern, ohne den Grundgedanken zu verlassen. So ist die Erfindung nicht auf eine gerastete Bedruckung der Aluminium-Vliesfolie beschränkt, hier können auch andere Arten von Verlegehinweisen aufgedruckt sein, auch ist die Erfindung nicht auf das bestimmte Flächengewicht der aufkaschierten Aluminium-Vliesfolie beschränkt.

## Patentansprüche

1. Wärme- und Trittschalldämmplatte (2) oder -rolle aus Mineralwolle und einer Abdeckfolie (3) für Fußbodenheizungen in Verbindung mit Gußasphalt (8),
**dadurch gekennzeichnet,**
**daß** die dem Gußasphalt (8) zugewandte Seite der Rolle bzw. Platte (2) mit einer hitzebeständigen Aluminium-Vliesfolie (3) versehen ist.

2. Wärme- und Trittschalldämmplatte nach Anspruch 1,
**dadurch gekennzeichnet,**
**daß** die Aluminium-Vliesfolie (3) lose verlegt oder auf die Rolle bzw. Platte (2) aufkaschiert ist.

3. Wärme- und Trittschalldämmplatte nach Anspruch 1 oder 2,
**dadurch gekennzeichnet,**
**daß** die Aluminium-Vliesfolie (3) mit einem Raster od. dgl. bedruckt ist.

4. Wärme- und Trittschalldämmplatte nach einem der vorangehenden Ansprüche,
**dadurch gekennzeichnet,**
**daß** die Folie (3) ein Flächengewicht pro Quadratmeter von 60 g bis 90 g aufweist.

5. Wärme- und Trittschalldämmplatte nach einem der vorangehenden Ansprüche,
**dadurch gekennzeichnet,**
**daß** die Aluminium-Vliesfolie aus einer PET-Kaschierfolie, einer Klebebeschichtung, einer Aluminium-Folie sowie einem PET-Vlies gebildet ist.
